# EUROPÄISCHE PATENTSCHRIFT

(11) **EP 3 026 279 B1**
(45) Veröffentlichungstag und Bekanntmachung des Hinweises auf die Patenterteilung: **19.09.2018**
(21) Anmeldenummer: 15003081.5
(22) Anmeldetag: 28.10.2015
(51) Int. Cl.: F16C 33/10, F16C 33/14, B21D 17/02, B21C 37/06, B21C 37/08, B21C 37/15

(54) **VERFAHREN ZUR HERSTELLUNG EINER INNESTRUKTURIERTEN GLEITLAGERBUCHSE**
METHOD FOR PRODUCING A PLAIN BEARING BUSHING WITH AN INTERNAL STRUCTURE
PROCEDE DE FABRICATION D'UN COUSSINET LISSE STRUCTURE

(30) Priorität: 25.11.2014 DE 102014017426
(43) Veröffentlichungstag der Anmeldung: 01.06.2016
(73) Patentinhaber: Wieland-Werke AG, 89079 Ulm (DE)
(72) Erfinder: Voggeser, Volker, 89250 Senden (DE); Thumm, Gerhard, 89155 Erbach (DE)

(56) Entgegenhaltungen:
- EP-A2- 0 295 919
- DE-A1- 19 532 951
- GB-A- 2 400 892
- US-A- 2 392 797
- US-A- 3 830 087

## Beschreibung

Die Erfindung betrifft ein Verfahren zur Herstellung einer innenstrukturierten Gleitlagerbuchse.

Bei Gleitelementen werden die Gleitflächen häufig mit Schmiernuten oder Schmiertaschen ausgeführt, um eine zufriedenstellende Schmiermittelversorgung zu erzielen. Insbesondere Schmiertaschen sind in Gestalt und Größe auf die Belastungs- und Bewegungsverhältnisse angepasst. Häufig werden die Schmiertaschen über die gesamte Lauffläche gleichmäßig verteilt. So verhelfen die Schmiertaschen einer Lagerstelle zu einem gleichmäßigen Schmiermittelfilm über die gesamte Lagerfläche. Bei gerollten Gleitlagerbuchsen kann bereits im Fertigungsprozess am eingesetzten Bandmaterial die gewünschte Struktur eingewalzt werden, bevor die Buchse auf Endmaß geformt wird. Schwieriger wird es, wenn innen liegende Strukturen in gedrehten Lagerbuchsen eingebracht werden müssen.

Aus der Druckschrift DE 10 2004 020 003 A1 ist beispielsweise ein derartiges Verfahren beschrieben. Es wird eine Innenstruktur bei einem zylindrischen Lagerelement mit enger Bohrung hergestellt, durch welche die Rückhaltefähigkeit für ein Schmieröl auf der Lagerfläche verbessert wird. Bei der Herstellung des Lagerelements werden Blindnuten erzeugt, die sich in der Längsrichtung des zylindrischen Innenbereichs erstrecken und die nicht bis an die Stirnseiten reichen. Dazu wird das fugenlose Lagerelement zunächst, ausgehend von einem offenen Ende, in eine konische Form gebracht. Anschließend werden die Blindnuten mittels eines Nutenformwerkzeugs auf der konischen Innenfläche ausgebildet, das durch das geweitete Ende in den mittleren zylindrischen Körperabschnitt eingeschoben wird. Dann wird der Konus mit einem weiteren Formwerkzeug in eine runde zylindrische Buchsenform überführt. Das Lagerelement weist dann Blindnuten in einem fugenlosen zylindrischen mittleren Abschnitt der inneren hohlen zylindrischen Oberfläche des Lagerelements auf.

Des Weiteren ist aus der Druckschrift GB 2 064 676 A ein gesintertes Gleitlager in Form eines Hohlzylinders mit einer auf der inneren Zylinderfläche eingebrachten Struktur bekannt. Die Struktur besteht aus Erhebungen und Einsenkungen, die linienartig parallel zur Zylinderachse auf der gesamten Länge verlaufen. Diese Strukturen werden mittels eines Innendorns als Matrize über einen Ziehprozess eingeprägt.

Aus der Druckschrift US 2 392 797 A ist ein Verfahren zur Strukturierung der Innenseite eines rohrförmigen Körpers beschrieben. Mit dem Verfahren werden Berippungen oder Riffelungen auf der Innenseite von Rohren oder ein Zug eines Gewehrlaufs hergestellt. Hierbei wird die Oberflächenstruktur eines Dorns im Inneren des rohrförmigen Körpers durch einen Press-/Ziehprozess mittels einer auf der Rohraußenseite angreifenden Matrize eingeprägt.

Zudem ist aus der Druckschrift EP 0 949 427 A1 eine innenstrukturierte Lagerbuchse aus porösem Material bekannt. Die Innenstrukturen werden in eine glatte Innenoberfläche eingedrückt. Hierzu wird ein zylinderförmiger Stempel verwendet, auf dessen Außenoberfläche kalottenförmige Prägeeinrichtungen angeordnet sind, die radial unter die Außenoberfläche des Stempels versenkbar sind. Die Prägeeinrichtung wird nur in den Bereichen ausgefahren und eingesetzt, in denen lokal Schmiermittelkanäle eingebracht werden sollen. Hierzu wird der Stempel axial durch die Innenseite der Lagerbuchse hindurchgeführt und dabei mit einsatzbereiter Prägeeinrichtung gedreht. Auf diese Weise können auf der Innenseite der Buchse lokal geschwungene und außeraxial verlaufende Schmiermittelnuten erzeugt werden. Mit dem durch die Nutenherstellung verdrängten Material wird lokal die Porosität des Sintermaterials reduziert.

Der Erfindung liegt die Aufgabe zugrunde, ein Herstellungsverfahren zur Innenstrukturierung von Gleitlagerbuchsen weiterzubilden.

Die Erfindung wird durch die Merkmale des Anspruchs 1 wiedergegeben. Die weiteren rückbezogenen Ansprüche betreffen vorteilhafte Aus- und Weiterbildungen der Erfindung.

Die Erfindung schließt ein Verfahren zur Herstellung einer innenstrukturierten Gleitlagerbuchse ein, mit folgenden, zeitlich aufeinanderfolgenden Verfahrensschritten:
a) Bereitstellen einer Gleitlagerbuchse mit mindestens einem Lagerbereich, der als Hohlzylinder mit einer Innenoberfläche gebildet ist und der einen Außendurchmesser und einen Innendurchmesser aufweist,
b) Bereitstellen eines Außenwerkzeugs mit einer Durchgangsöffnung, deren kleinster Innendurchmesser kleiner ist als der Außendurchmesser des Lagerbereichs der bereitgestellten Gleitlagerbuchse, wobei die Durchgangsöffnung mindestens auf einer Seite eine konische Erweiterung aufweist, deren maximaler Innendurchmesser größer als der Außendurchmesser des Lagerbereichs der bereitgestellten Gleitlagerbuchse ist,
c) Bereitstellen eines Innenwerkzeugs, welches einen einstückigen, zylindrischen Arbeitsbereich mit einer Außenoberfläche mit einer Struktur aufweist, wobei der maximale Außendurchmesser des Arbeitsbereichs kleiner ist als der Innendurchmesser des Lagerbereichs der bereitgestellten Gleitlagerbuchse,
d) Einführen des Innenwerkzeugs in den Lagerbereich der Gleitlagerbuchse,
e) Einbringen der Gleitlagerbuchse und des Innenwerkzeugs in die konische Erweiterung der Durchgangsöffnung des Außenwerkzeugs,
f) Einpressen der Gleitlagerbuchse mit Hilfe des Innenwerkzeugs in die Durchgangsöffnung des Außenwerkzeugs unter Reduktion des Außen- und Innendurchmessers des Lagerbereichs der Gleitlagerbuchse, so dass die Innenoberfläche des Lagerbereichs auf die Außenoberfläche des Innenwerkzeugs gepresst wird und in die Innenoberfläche des Lagerbereichs eine Innenstruktur als Negativform der Struktur der Außenoberfläche des Innenwerkzeugs eingeprägt wird,
g) Entfernen der Gleitlagerbuchse aus der Durchgangsöffnung des Außenwerkzeugs,
h) radiales Aufweiten der Gleitlagerbuchse, so dass das Innenwerkzeug aus der Gleitlagerbuchse entfernbar ist.

Die Erfindung geht dabei von der Überlegung aus, dass das Herstellungsverfahren aus einer Abfolge von aufeinander folgenden Ziehprozessschritten besteht. Im ersten Verfahrensschritt wird die zu bearbeitende Innenoberfläche einer hohlzylindrischen Gleitlagerbuchse zur mechanischen Umformung vorbereitet. Die Innenoberfläche der Buchse ist hierzu üblicherweise glatt und schmutzfrei. Gegebenenfalls können auf der Oberfläche Ziehöl oder andere zur Umformung dienliche Substanzen aufgebracht sein. In einem darauf folgenden Verfahrensschritt wird ein Außenwerkzeugs bereitgestellt, welches als äußere Ziehmatrize oder als Ziehstein dient. Dieses kann beispielsweise mit einer zylindrischen Durchgangsöffnung ausgeführt sein. Der etwas geringere Innendurchmesser der Durchgangsöffnung, verglichen mit dem Außendurchmesser der Buchse, bewirkt die Umformung beim Ziehvorgang. Dabei bewirkt die geringere Durchtrittsöffnung des Außenwerkzeugs eine radiale Verjüngung des Buchsenquerschnitts. Die Durchgangsöffnung des Außenwerkzeugs hat zumindest auf der Eingangsseite eine konische Erweiterung mit einem größeren maximalen Innendurchmesser als der Außendurchmesser der Buchse, um als Führungsöffnung die Buchse in den zylindrischen Umformungsbereich zu befördern.

Das Innenwerkzeug ist beispielsweise in Form eines Kalibrierstempels ausgeführt. Dieser weist einen einstückigen, zylindrischen Arbeitsbereich mit einer strukturierten Außenoberfläche auf. Diese Struktur wird in einem weiteren Verfahrensschritt auf die Innenoberfläche des Gleitlagerelements eingeprägt. Um den Kalibrierstempel im Gleitlager positionieren zu können, ist der maximale Außendurchmesser des Arbeitsbereichs kleiner als der Innendurchmesser des Lagerbereichs.

Dies schafft die Voraussetzungen, dass das Innenwerkzeug in den Lagerbereich der Gleitlagerbuchse über die konische Erweiterung der Durchgangsöffnung des Außenwerkzeugs eingebracht werden kann. Der eigentliche Umformprozess geschieht durch das Einpressen der Gleitlagerbuchse in die Durchgangsöffnung des Außenwerkzeugs unter Reduktion des Außen- und Innendurchmessers des Lagerbereichs der Gleitlagerbuchse. Hierbei wird die Innenoberfläche des Lagerbereichs auf die Außenoberfläche des Innenwerkzeugs gepresst und in die Innenoberfläche des Lagerbereichs wird eine Innenstruktur als Negativform der Struktur der Außenoberfläche des Innenwerkzeugs eingeprägt.

Nach diesem Umformschritt wird die Gleitlagerbuchse aus der Durchgangsöffnung des Außenwerkzeugs entfernt. Dies geschieht beispielsweise durch Ausschieben der Buchse oder durch ein Öffnen des Außenwerkzeugs. Damit die Gleitlagerbuchse vom Innenwerkzeug entfernt werden kann, muss diese radial aufgeweitet werden, dies zumindest so weit, dass auch die zur Umformung verwendete Außenstruktur des Werkzeugs die Buchse freigibt. Ein Aufweiten kann mechanisch elastisch erfolgen, indem sich die Buchse durch eine Entspannung außerhalb der Ziehmatrize aufweitet. Ein Aufweiten kann auch thermisch erfolgen, indem das Gleitelement zumindest lokal erwärmt wird. Diese Vorgehensweise eignet sich besonders bei nahtlosem Buchsenmaterial. Ein mechanisches Aufweiten bei Gleitlagerbuchsen mit Stoß kann auch dadurch erfolgen, dass die Buchse an der Stoßfuge aufgeweitet und damit der Durchmesser vergrößert wird.

Der besondere Vorteil besteht darin, dass durch die Strukturierung der Lagerbereich ohne weitere Nachbearbeitung einbaufertige Gleitelemente gefertigt werden können. Die erfindungsgemäß strukturierten Oberflächen können das Einlaufverhalten der Gleitelemente und damit die Lebensdauer erheblich verbessern. Zudem handelt es sich bei den Ziehprozessschritten um eine vergleichsweise kostengünstige Fertigungsvariante.

Prinzipiell kann die Innenstruktur der Gleitlagerbuchse auch nutartige Rillen aufweisen. Diese können als Längsrillen oder Helixrillen ausgebildet sein.
In bevorzugter Ausgestaltung der Erfindung kann die Innenstruktur der Gleitlagerbuchse räumlich begrenzte Vertiefungen und/oder Erhebungen aufweisen. Mit anderen Worten: Es handelt sich bei der Innenstruktur um lokal als Dimpel oder Kuppen ausgebildete Strukturelemente.

Vorteilhafterweise kann die Innenstruktur der Gleitlagerbuchse Vertiefungen und/oder Erhebungen aufweisen, die statistisch verteilt sind. Neben regelmäßigen Oberflächenstrukturen kann diese Alternative eine besonders gleichmäßige Schmiermittelverteilung bewirken.

Demgegenüber ist es auch möglich, dass die Innenstruktur der Gleitlagerbuchse Vertiefungen und/oder Erhebungen aufweist, deren Form in unregelmäßiger Weise variiert. Bei einer derartigen Ausbildung der Struktur kann die Schmiermittelversorgung optimiert werden.

Bei einer vorteilhaften Ausführungsform der Erfindung kann die Innenstruktur der Gleitlagerbuchse Vertiefungen mit unterschiedlicher Tiefe und/oder Erhebungen mit unterschiedlicher Höhe aufweisen. Die dabei gebildeten Hohlräume mit unterschiedlicher Form und Gestalt können auch zur Aufnahme von störenden Schmutzpartikeln zur Verfügung stehen.

In vorteilhafter Ausgestaltung der Erfindung kann die Gleitlagerbuchse aus einem kompakten Werkstoff mit elastischen Eigenschaften bestehen und das radiale Aufweiten unter Ausnutzung der elastischen Eigenschaften des Werkstoffs erfolgen. Durch die elastischen Eigenschaften wird die Gleitlagerbuchse radial aufgeweitet, sobald diese die Durchgangsöffnung des Außenwerkzeugs verlassen hat. Durch die Aufweitung wird das Innenwerkzeug ebenfalls freigegeben, welches anschließend aus dem Inneren der Buchse durch Herausziehen entfernt werden kann.

In bevorzugter Ausführungsform der Erfindung kann das radiale Aufweiten durch Erwärmen der Gleitlagerbuchse unter Ausnutzung der thermischen Ausdehnung des Werkstoffs erfolgen. Diese Maßnahme dient beispielsweise zur Unterstützung der elastischen Aufweitung, wodurch die Buchse auch höhere Strukturen des Innenwerkzeugs freigibt.

In besonders bevorzugter Ausführungsform kann die Gleitlagerbuchse eine gedrehte Gleitlagerbuchse sein. Bei gedrehten Gleitlagern, die aus gegossenen, gepressten oder gezogenen Rohren bzw. Stangen gefertigt werden, ist die Höhe der eingeprägten Strukturen so bemessen, dass diese geringer ist als die radiale Aufweitung durch Entlastung.

In weiterer vorteilhafter Ausgestaltung der Erfindung kann die Gleitlagerbuchse eine aus Bandmaterial gerollte Gleitlagerbuchse sein und eine parallel zu ihrer Achse verlaufende Stoßfuge aufweisen. Bei gerollten Gleitlagern, die meist aus Bändern hergestellt sind und eine Fuge aufweisen, kann eine Aufweitung über ein Auseinanderziehen der Stoßfugenflächen erfolgen. Bei verklinkten Stoßfugen kann ein gewisses Spiel vorhanden sein, welches das benötigte Aufweiten zulässt.

Vorteilhafterweise kann das radiale Aufweiten mittels Erweiterung der Stoßfuge erfolgen. So kann bei gerollten Gleitlagern über das rein elastische Aufweiten auch die vorhandene Fuge an den Stoßfugenflächen aufgeweitet werden, um das Innenwerkzeug freizugeben.

Ausführungsbeispiele der Erfindung werden anhand der schematischen Zeichnungen näher erläutert.

Darin zeigen:
- Fig. 1: schematisch einen Querschnitt der Werkzeuganordnung zu Beginn des Herstellungsverfahrens,
- Fig. 2: schematisch einen Querschnitt der Werkzeuganordnung beim Einführen des Innenwerkzeugs in die Gleitlagerbuchse,
- Fig. 3: schematisch einen Querschnitt der Werkzeuganordnung nach Einführen des Innenwerkzeugs in die Gleitlagerbuchse,
- Fig. 4: schematisch einen Querschnitt der Werkzeuganordnung beim Einpressen der Gleitlagerbuchse in das Außenwerkzeug,
- Fig. 5: schematisch einen Querschnitt der Werkzeuganordnung beim Einpressen der Gleitlagerbuchse in das Außenwerkzeug kurz vor dem Abschluss des Pressvorgangs,
- Fig. 6: schematisch einen Querschnitt der Werkzeuganordnung nach Abschluss des Pressvorgangs,
- Fig. 7: schematisch einen Querschnitt der Werkzeuganordnung beim Entfernen des Innenwerkzeugs,
- Fig. 8: schematisch einen Querschnitt der Werkzeuganordnung am Ende des Herstellungsprozesses,
- Fig. 9: schematisch einen Querschnitt des Innenwerkzeugs,
- Fig. 10: schematisch einen Querschnitt einer alternativen Oberflächenstruktur eines Innenwerkzeugs, und
- Fig. 11: schematisch einen Querschnitt einer weiteren alternativen Oberflächenstruktur eines Innenwerkzeugs.

Einander entsprechende Teile sind in allen Figuren mit denselben Bezugszeichen versehen.

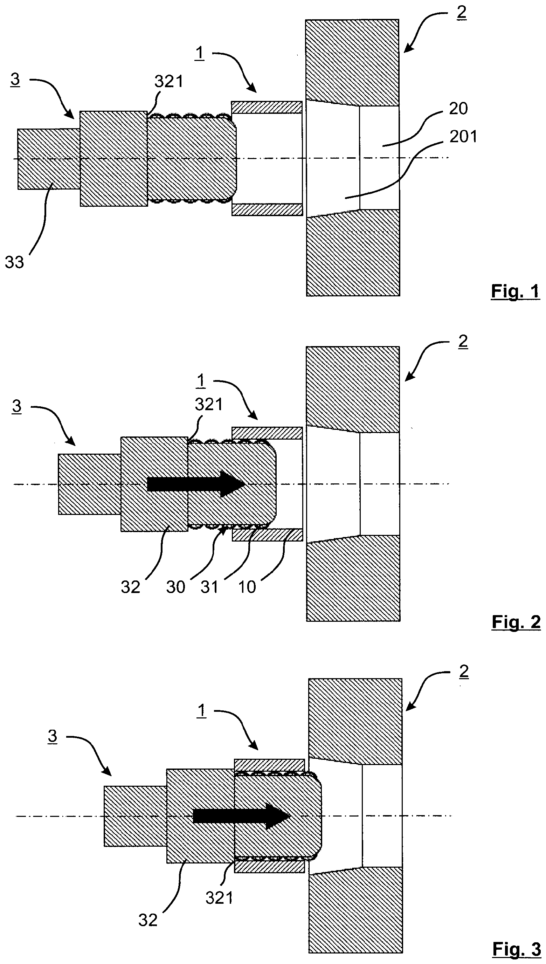

Fig. 1 zeigt schematisch einen Querschnitt der Werkzeuganordnung zu Beginn des Herstellungsverfahrens. Bei diesem Verfahrensstadium werden die Gleitlagerbuchse 1, das Außenwerkzeug 2 sowie das Innenwerkzeug 3 bereitgestellt. Das Innenwerkzeug 3 umfasst einen zylindrisch geformten Arbeitsbereich 30, der eine Struktur 31 aufweist. Diese Struktur 31 wird in einem späteren Verfahrensstadium in den Lagerbereich 10 der Gleitlagerbuchse 1 eingeprägt. In diesem Fall handelt es sich bei der Struktur 31 um kalottenförmige Ausbuchtungen mit einer vergleichsweise rauen Oberfläche.

Eingangsseitig weist die zylindrische Durchgangsöffnung 20 des Außenwerkzeugs 2 am eingangsseitigen Ende eine konische Erweiterung 201 auf, um die Gleitlagerbuchse 1 in den Umformbereich einzuführen. Das Innenwerkzeug 3 weist im mittleren Bereich einen Flansch 32 auf, dessen Anschlag 321 die Position der Gleitlagerbuchse 1 auf dem Arbeitsbereich 30 festlegt. Um einen Anschlag 321 für die Stirnfläche der Gleitlagerbuchse 1 auszubilden, ist der Durchmesser des Flansches 32 größer als der Buchseninnendurchmesser. Die axiale Kraftübertragung geht von einem Stempel 33 aus, der mit dem Flansch 32 verbunden ist. Das Innenwerkzeug 3 kann einstückig oder mehrstückig ausgebildet sein. Bei mehrteiligen Ausführungen kann auf Bedarf beispielsweise der Arbeitsbereich 30 zur Verwendung unterschiedlicher Strukturen 31 austauschbar sein.

Fig. 2 zeigt schematisch einen Querschnitt der Werkzeuganordnung beim Einführen des Innenwerkzeugs in die Gleitlagerbuchse 1. Der auf der Innenseite der Gleitlagerbuchse 1 liegende Lagerbereich 10 wird dabei über den Arbeitsbereich 30 des Innenwerkzeugs 3 in Richtung des Anschlags 321 am Flansch 32 geschoben. Bei diesem Ineinanderführen greift die Struktur 31 noch nicht in den Lagerbereich 10 ein. Die Gleitlagerbuchse 1 ist dabei noch nicht im Eingriffsbereich des Außenwerkzeugs 2.

Fig. 3 zeigt schematisch einen Querschnitt der Werkzeuganordnung nach Einführen des Innenwerkzeugs 3 in die Gleitlagerbuchse 1. Nachdem die Gleitlagerbuchse 1 mit dem Anschlag 321 des Flanschs 32 in Kontakt kommt, wird diese vom Innenwerkzeug 3 in das Außenwerkzeug 2 mitgeführt.

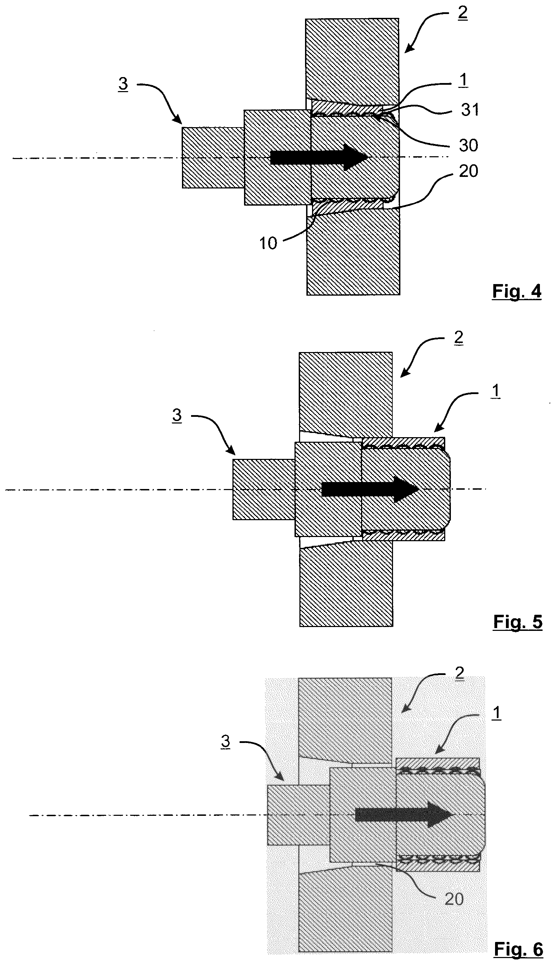

Fig. 4 zeigt schematisch einen Querschnitt der Werkzeuganordnung beim Einpressen der Gleitlagerbuchse 1 in das Außenwerkzeug 2. In diesem Verfahrensstadium wird die Gleitlagerbuchse 1 im Außenwerkzeug 2 umgeformt. Hierbei wird die Gleitlagerbuchse 1 durch die engere Durchgangsöffnung 20 gepresst und im Durchmesser verringert. Dies bewirkt auf der Innenseite der Gleitlagerbuchse 1, dass die Struktur 31 im Arbeitsbereich 30 des Innenwerkzeugs 3 in den Lagerbereich 10 eingepresst wird.

Fig. 5 zeigt schematisch einen Querschnitt der Werkzeuganordnung beim Einpressen der Gleitlagerbuchse 1 in das Außenwerkzeug 2 kurz vor dem Abschluss des Pressvorgangs. In diesem Verfahrensstadium wird die Gleitlagerbuchse 1 mit dem Innenwerkzeug 3 durch das Außenwerkzeug 2 axial über dessen gesamte Länge hindurchgepresst.

Fig. 6 zeigt schematisch einen Querschnitt der Werkzeuganordnung nach Abschluss des Pressvorgangs. In diesem Verfahrensstadium tritt die Gleitlagerbuchse 1 aus der Durchgangsöffnung 20 des Außenwerkzeugs 2 aus. Durch die elastischen Eigenschaften des Werkstoffs der Gleitlagerbuchse 1 weitet sich diese in radialer Richtung und gibt so das Innenwerkzeug 3 wieder frei.

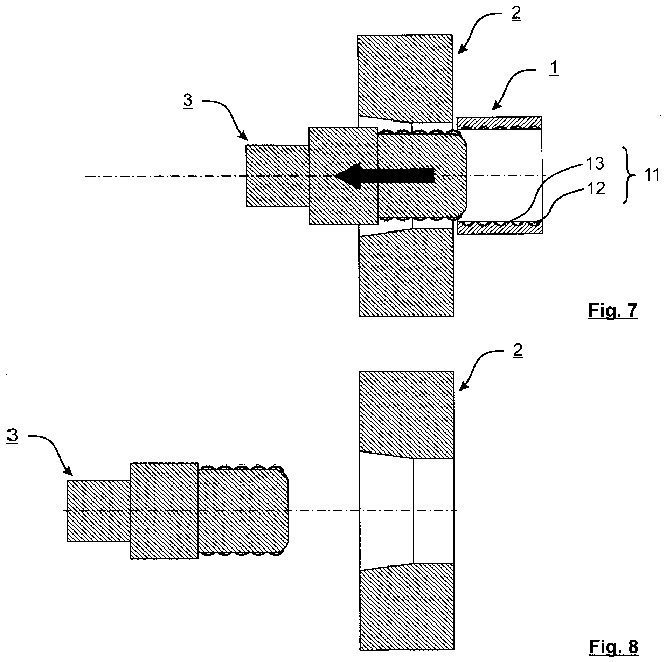

Fig. 7 zeigt schematisch einen Querschnitt der Werkzeuganordnung beim Entfernen des Innenwerkzeugs 3. Das Innenwerkzeugs 3 wird dabei in Gegenrichtung zur Pressrichtung axial aus dem Außenwerkzeug 2 herausgezogen und dabei die Gleitlagerbuchse 1 abgestreift. Im Lagerbereich 10 ist nun die Innenstruktur 11 als Vertiefungen 12 und Erhebungen 13 in der Oberfläche ausgeformt.

Fig. 8 zeigt schematisch einen Querschnitt der Werkzeuganordnung am Ende des Herstellungsprozesses. In dieser Grundstellung des Außenwerkzeugs 2 und des Innenwerkzeugs 3 kann erneut eine weitere Gleitlagerbuchse in den Prozess eingeführt werden.

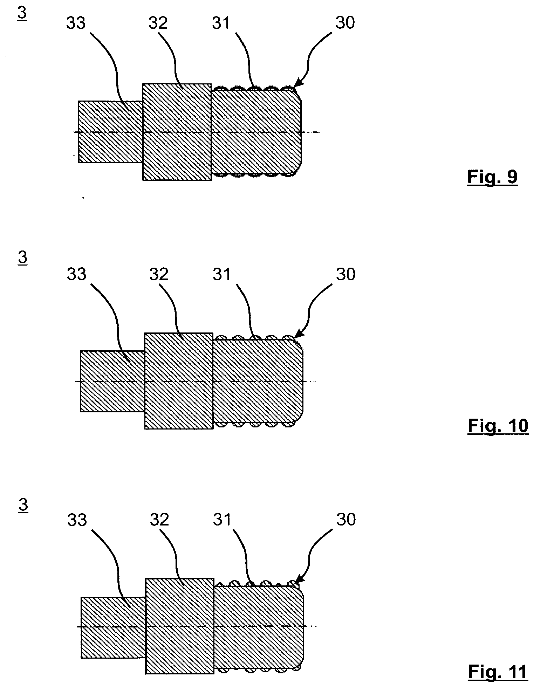

Die weiteren Fig. 9 bis 11 zeigen vorteilhafte Ausführungsformen der Struktur 31 des Arbeitsbereiches 30 eines Innenwerkzeugs 3. Fig. 9 zeigt schematisch einen Querschnitt des Innenwerkzeugs mit kalottenförmigen Ausbuchtungen mit einer vergleichsweise rauen Oberfläche. Der Arbeitsbereiches 30 wird durch den Flansch 32 abgegrenzt, an den sich der Stempel 33 zur Krafteinleitung anschließt. Über den Stempel 33 werden im Verfahrensverlauf die axialen Press- und Ziehkräfte eingebracht. Fig. 10 zeigt schematisch einen Querschnitt einer alternativen Oberflächenstruktur eines Innenwerkzeugs. Es handelt sich um eine weitere Variante einer Struktur 31 mit kalottenförmigen Ausbuchtungen mit glatter Oberfläche. Die Kalotten sind in Gestalt und Größe gleich ausgeführt. Dagegen ist aus Fig. 11 schematisch ein Querschnitt einer weiteren alternativen Oberflächenstruktur eines Innenwerkzeugs dargestellt. Die Kalotten sind von unterschiedlicher Größe statistisch im Arbeitsbereich 30 angeordnet.

### Bezugszeichenliste

- 1: Gleitlagerbuchse
- 10: Lagerbereich
- 11: Innenstruktur
- 12: Vertiefungen
- 13: Erhebungen
- 2: Außenwerkzeug
- 20: Durchgangsöffnung
- 201: Erweiterung
- 3: Innenwerkzeug
- 30: Arbeitsbereich
- 31: Struktur
- 32: Flansch
- 321: Anschlag
- 33: Stempel

## Patentansprüche

1. Verfahren zur Herstellung einer innenstrukturierten Gleitlagerbuchse (1), mit folgenden, zeitlich aufeinanderfolgenden Verfahrensschritten:
a) Bereitstellen einer Gleitlagerbuchse (1) mit mindestens einem Lagerbereich (10), der als Hohlzylinder mit einer Innenoberfläche gebildet ist und der einen Außendurchmesser und einen Innendurchmesser aufweist, wobei die Gleitlagerbuchse (1) eine aus Bandmaterial gerollte Gleitlagerbuchse ist und eine parallel zu ihrer Achse verlaufende Stoßfuge aufweist,
b) Bereitstellen eines Außenwerkzeugs (2) mit einer Durchgangsöffnung (20), deren kleinster Innendurchmesser kleiner ist als der Außendurchmesser des Lagerbereichs (10) der bereitgestellten Gleitlagerbuchse (1), wobei die Durchgangsöffnung (20) mindestens auf einer Seite eine konische Erweiterung (201) aufweist, deren maximaler Innendurchmesser größer als der Außendurchmesser des Lagerbereichs (10) der bereitgestellten Gleitlagerbuchse (1) ist,
c) Bereitstellen eines Innenwerkzeugs (3), welches einen einstückigen, zylindrischen Arbeitsbereich (30) mit einer Außenoberfläche mit einer Struktur (31) aufweist, wobei der maximale Außendurchmesser des Arbeitsbereichs (30) kleiner ist als der Innendurchmesser des Lagerbereichs (10) der bereitgestellten Gleitlagerbuchse (1),
d) Einführen des Innenwerkzeugs (3) in den Lagerbereich (10) der Gleitlagerbuchse (1),
e) Einbringen der Gleitlagerbuchse (1) und des Innenwerkzeugs (3) in die konische Erweiterung (201) der Durchgangsöffnung (20) des Außenwerkzeugs (2),
f) Einpressen der Gleitlagerbuchse (1) mit Hilfe des Innenwerkzeugs (3) in die Durchgangsöffnung (20) des Außenwerkzeugs (2) unter Reduktion des Außen- und Innendurchmessers des Lagerbereichs (10) der Gleitlagerbuchse (1), so dass die Innenoberfläche des Lagerbereichs (10) auf die Außenoberfläche des Innenwerkzeugs (3) gepresst wird und in die Innenoberfläche des Lagerbereichs (10) eine Innenstruktur (11) als Negativform der Struktur (31) der Außenoberfläche des Innenwerkzeugs (3) eingeprägt wird,
g) Entfernen der Gleitlagerbuchse (1) aus der Durchgangsöffnung (20) des Außenwerkzeugs (2),
h) radiales Aufweiten der Gleitlagerbuchse (1), so dass das Innenwerkzeug (3) aus der Gleitlagerbuchse (1) entfernbar ist.

2. Verfahren nach Anspruch 1, **dadurch gekennzeichnet,**
**dass** die Innenstruktur (11) der Gleitlagerbuchse (1) räumlich begrenzte Vertiefungen (12) und/oder Erhebungen (13) aufweist.

3. Verfahren nach Anspruch 1 oder 2, **dadurch gekennzeichnet,**
**dass** die Innenstruktur (11) der Gleitlagerbuchse (1) Vertiefungen (12) und/oder Erhebungen (13) aufweist, die statistisch verteilt sind.

4. Verfahren nach einem der Ansprüche 1 bis 3, **dadurch gekennzeichnet,**
**dass** die Innenstruktur (11) der Gleitlagerbuchse (1) Vertiefungen (12) und/oder Erhebungen (13) aufweist, deren Form in unregelmäßiger Weise variiert.

5. Verfahren nach einem der Ansprüche 1 bis 4, **dadurch gekennzeichnet,**
**dass** die Innenstruktur (11) der Gleitlagerbuchse (1) Vertiefungen (12) mit unterschiedlicher Tiefe und/oder Erhebungen (13) mit unterschiedlicher Höhe aufweist.

6. Verfahren nach Anspruch 1, **dadurch gekennzeichnet,**
**dass** die Gleitlagerbuchse (1) aus einem kompakten Werkstoff mit elastischen Eigenschaften besteht und das radiale Aufweiten unter Ausnutzung der elastischen Eigenschaften des Werkstoffs erfolgt.

7. Verfahren nach Anspruch 1 oder 6, **dadurch gekennzeichnet,**
**dass** das radiale Aufweiten durch Erwärmen der Gleitlagerbuchse (1) unter Ausnutzung der thermischen Ausdehnung des Werkstoffs erfolgt.

8. Verfahren nach Anspruch 1, **dadurch gekennzeichnet,**
**dass** das radiale Aufweiten mittels Erweiterung der Stoßfuge erfolgt.

## Claims

1. Method for producing an internally structured plain bearing bushing (1), having the following temporally sequential method steps
a) providing a plain bearing bushing (1) having at least one bearing region (10) which is formed as a hollow cylinder having an inner surface and which has an outer diameter and an inner diameter, wherein the plain bearing bushing (1) is a plain bearing bushing which is rolled from strip material and has a butt joint which extends parallel with the axis thereof,
b) providing an external tool (2) having a through-opening (20) whose smallest inner diameter is smaller than the outer diameter of the bearing region (10) of the plain bearing bushing (1) provided, wherein the through-opening (20) has at least at one side a conical expansion (201) whose maximum inner diameter is greater than the outer diameter of the bearing region (10) of the plain bearing bushing (1) provided,
c) providing an internal tool (3) which has an integral cylindrical operating region (30) having an outer surface having a structure (31), wherein the maximum outer diameter of the operating region (30) is smaller than the inner diameter of the bearing region (10) of the plain bearing bushing (1) provided,
d) introducing the internal tool (3) into the bearing region (10) of the plain bearing bushing (1),
e) introducing the plain bearing bushing (1) and the internal tool (3) into the conical expansion (201) of the through-opening (20) of the external tool (2),
f) pressing the plain bearing bushing (1) using the internal tool (3) into the through-opening (20) of the external tool (2) with the outer and inner diameter of the bearing region (10) of the plain bearing bushing (1) being reduced so that the inner surface of the bearing region (10) is pressed onto the outer surface of the internal tool (3) and an internal structure (11) is impressed into the inner surface of the bearing region (10) as a negative form of the structure (31) of the outer surface of the internal tool (3),
g) removing the plain bearing bushing (1) from the through-opening (20) of the external tool (2),
h) radially expanding the plain bearing bushing (1) so that the internal tool (3) can be removed from the plain bearing bushing (1).

2. Method according to claim 1, **characterised in that** the internal structure (11) of the plain bearing bushing (1) has spatially limited recesses (12) and/or projections (13).

3. Method according to claim 1 or 2, **characterised in that** the internal structure (11) of the plain bearing bushing (1) has recesses (12) and/or projections (13) which are statistically distributed.

4. Method according to any one of claims 1 to 3, **characterised in that** the internal structure (11) of the plain bearing bushing (1) has recesses (12) and/or projections (13) whose shape varies in an irregular manner.

5. Method according to any one of claims 1 to 4, **characterised in that** the internal structure (11) of the plain bearing bushing (1) has recesses (12) with different depths and/or projections (13) with different heights.

6. Method according to claim 1, **characterised in that** the plain bearing bushing (1) comprises a compact material with resilient properties and the radial expansion is carried out using the resilient properties of the material.

7. Method according to claim 1 or claim 6, **characterised in that** the radial expansion is carried out by heating the plain bearing bushing (1) using the thermal expansion of the material.

8. Method according to claim 1, **characterised in that** the radial expansion is carried out by means of expansion of the butt joint.

## Revendications

1. Procédé de fabrication d'un coussinet lisse (1) à structure intérieure, comprenant les étapes de procédé suivantes successives dans le temps :
a) la fourniture d'un coussinet lisse (1) pourvu d'au moins une zone de palier (10), qui est formée comme un cylindre creux présentant une surface intérieure et qui présente un diamètre extérieur et un diamètre intérieur, dans lequel le coussinet lisse (1) est un coussinet lisse enroulé à partir d'une bande de matériau et présente un joint montant s'étendant parallèlement à son axe,
b) la fourniture d'un moule extérieur (2) pourvu d'une ouverture de passage (20), dont le plus petit diamètre intérieur est inférieur au diamètre extérieur de la zone de palier (10) du coussinet lisse (1) fourni, dans lequel l'ouverture de passage (20) présente au moins sur une face un évasement conique (201) dont le diamètre intérieur maximal est supérieur au diamètre extérieur de la zone de palier (10) du coussinet lisse (1) fourni,
c) la fourniture d'un moule intérieur (3), lequel présente une zone de travail cylindrique (30) d'une seule pièce pourvue d'une surface extérieure comprenant une structure (31), dans lequel le diamètre extérieur maximal de la zone de travail (30) est inférieur au diamètre intérieur de la zone de palier (10) du coussinet lisse (1) fourni,
d) l'insertion du moule intérieur (3) dans la zone de palier (10) du coussinet lisse (1),
e) l'introduction du coussinet lisse (1) et du moule intérieur (3) dans l'évasement conique (201) de l'ouverture de passage (20) du moule extérieur (2),
f) l'enfoncement du coussinet lisse (1) à l'aide du moule intérieur (3) dans l'ouverture de passage (20) du moule extérieur (2) par réduction du diamètre extérieur et intérieur de la zone de palier (10) du coussinet lisse (1), de sorte que la surface intérieure de la zone de palier (10) est pressée sur la surface extérieure du moule intérieur (3) et qu'une structure intérieure (11) est imprimée en tant qu'empreinte négative de la structure (31) de la surface extérieure du moule intérieur (3) dans la surface intérieure de la zone de palier (10),
g) le retrait du coussinet lisse (1) de l'ouverture de passage (20) du moule extérieur (2),
h) l'élargissement radial du coussinet lisse (1), de sorte que le moule intérieur (3) peut être retiré du coussinet lisse (1).

2. Procédé selon la revendication 1, **caractérisé**
**en ce que** la structure intérieure (11) du coussinet lisse (1) présente des évidements (12) et/ou des parties saillantes (13) délimités dans l'espace.

3. Procédé selon la revendication 1 ou 2, **caractérisé en ce que** la structure intérieure (11) du coussinet lisse (1) présente des évidements (12) et/ou des parties saillantes (13) qui sont répartis de manière statistique.

4. Procédé selon l'une des revendications 1 à 3, **caractérisé en ce que** la structure intérieure (11) du coussinet lisse (1) présente des évidements (12) et/ou des parties saillantes (13) dont la forme varie de manière irrégulière.

5. Procédé selon l'une quelconque des revendications 1 à 4, **caractérisé en ce que** la structure intérieure (11) du coussinet lisse (1) présente des évidements (12) d'une profondeur différente et/ou des parties saillantes (13) d'une hauteur différente.

6. Procédé selon la revendication 1, **caractérisé en ce que** le coussinet lisse (1) est constitué d'un matériau compact aux propriétés élastiques et l'élargissement radial s'effectue en exploitant les propriétés élastiques du matériau.

7. Procédé selon la revendication 1 ou 6, **caractérisé en ce que** l'élargissement radial s'effectue par chauffage du coussinet lisse (1) en exploitant la dilatation thermique du matériau.

8. Procédé selon la revendication 1, **caractérisé en ce que** l'élargissement radial s'effectue par évasement du joint montant.
